# EUROPÄISCHE PATENTSCHRIFT

(11) **EP 4 043 263 B1**
(45) Veröffentlichungstag und Bekanntmachung des Hinweises auf die Patenterteilung: **04.06.2025**
(21) Anmeldenummer: 22151074.6
(22) Anmeldetag: 12.01.2022
(51) Int. Cl.: B60K 35/10, B60K 35/25, G06F 3/048

(54) **VERFAHREN ZUR STEUERUNG VON FAHRZEUGFUNKTIONEN**
METHOD FOR CONTROLLING VEHICLE FUNCTIONS
PROCÉDÉ DE COMMANDE DS FONCTIONS DE VÉHICULE

(30) Priorität: 12.02.2021 DE 102021201376
(43) Veröffentlichungstag der Anmeldung: 17.08.2022
(73) Patentinhaber: VOLKSWAGEN AG, 38440 Wolfsburg (DE)
(72) Erfinder: Seifert, Jörg, 06118 Halle (DE)

(56) Entgegenhaltungen:
- EP-A1- 3 040 808
- DE-A1- 102004 037 644
- DE-A1- 102010 048 745
- DE-A1- 102014 200 609
- DE-A1- 102014 213 429
- DE-A1- 102018 210 825
- DE-B4- 102017 211 524
- US-A1- 2006 238 517

## Beschreibung

Die Erfindung betrifft ein Verfahren zur Steuerung von Fahrzeugfunktionen, insbesondere eines Kraftfahrzeuges, wobei Fahrzeugfunktionen zumindest teilweise in einem ersten Bedien- und Anzeigebereich eingestellt werden, wobei der erste Bedien- und Anzeigebereich zumindest teilweise berührungssensitiv ist.

In modernen Kraftfahrzeugen werden immer mehr elektronische Einrichtungen installiert, die vom Fahrer des Fahrzeugs individuell bedienbar sind. Darunter fällt beispielsweise das Infotainmentsystem und die damit verbundene Bedienung des Radios oder anderer Musikquellen. Daneben gehören Fahrassistenzsysteme, wie Spurhaltesysteme oder Navigationssysteme, beinahe zum Standard. Auch fahrzeugspezifische Einstellungen, beispielsweise Fahrwerkeinstellungen, können häufig über elektronische Einrichtungen vom Fahrer des Fahrzeugs angepasst werden. Zusätzlich wird das Öffnen der Fenster beinahe ausschließlich elektronisch realisiert und auch die Lüftung und/oder Klimaanlage stellen weitere bedienbare elektronische Einheiten in einem modernen Kraftfahrzeug dar.

Um die Bedienung so einfach wie möglich zu gestalten, wird üblicherweise fahrzeugseitig eine Multifunktions-Bedieneinrichtung vorgesehen, umfassend einen Anzeigebereich, üblicherweise ein hinreichend großes Display, an dem eine Vielzahl unterschiedlicher Funktionsgruppen oder Funktionen, die ausgewählt werden können, angezeigt werden. Die Multifunktions-Bedieneinrichtung kann über verschiedene Bedienelemente gesteuert werden. Mit der Zeit haben sich berührungssensitive Displays durchgesetzt, die es ermöglichen, die zu steuernden Funktionen übersichtlich darzustellen.

Die WO 2013/159911 A1 zeigt beispielsweise eine Multifunktions-Bedieneinrichtung für ein Kraftfahrzeug mit einer Bildschirmanzeige in Form eines Touchscreens und einem Bedienelement zum An- oder Auswählen einer an der Bildschirmanzeige angezeigten Funktion. Das Bedienelement ist dabei als drückbare Taste mit zusätzlicher Berührungssensitivität ausgestaltet.

Die EP 3 040 842 A1 offenbart eine Anwenderschnittstelle zur hybriden Nutzung einer Anzeigeeinheit eines Fortbewegungsmittels mit einem Primärbildschirm und einer zusätzlichen Fingerleiste mit einer Annäherungssensorik, um die Bedienung der Anwenderschnittstelle mittels Gestensteuerung zu vereinfachen.

Die DE 10 2010 048 745 A1 offenbart eine Benutzerschnittstelle zur Bedienung von Funktionen eines Kraftfahrzeugs. Dazu ist ein Touchscreen vorgesehen, mittels dessen ein Anwender Eingaben vornehmen kann. Der Touchscreen weist unterschiedliche Bedien- oder Anzeigebereiche auf.

Die DE 10 2004 037 644 A1 offenbart eine Anzeigevorrichtung mit einem Display zum Anzeigen von für die Bedienung eines Kraftfahrzeuges relevanter Informationen. Auf dem Display ist eine Aktorschicht angeordnet, deren Oberflächengeometrie in Abhängigkeit eines Steuersignals verformbar ist. Dazu können Softkeys vorgesehen sein, die sich im Randbereich des Anzeigebereichs befinden.

Die Druckschrift DE 10 2018 120 825 A1 offenbart eine Steuervorrichtung für ein Fahrzeug mit einem berührungsempfindlichen Display. Dabei ist vorgesehen, dass das Display digital aufgeteilt werden kann, so dass unterschiedliche Funktionen in unterschiedlichen Bereichen des Displays dargestellt werden können.

Die DE 10 2014 213 429 A1 offenbart ein Touchpad für eine Benutzer-Fahrzeug-Interaktion. Dabei ist ein Touchpad vorgesehen, das an abgewinkelte Bereiche angrenzt. Auf diese Weise kann ein Benutzer, ohne hinsehen zu müssen, das Touchpad ertasten, weil es in einer Vertiefung angeordnet ist.

Die aus dem Stand der Technik bekannten Lösungen decken nur einen Teil der einstellbaren Fahrzeugfunktionen ab. Verschiedene Komfortfunktionen werden mittels separater elektronischer Einrichtungen bedient, um die Bildschirmanzeige nicht zu überladen.

Der Erfindung liegt nun die Aufgabe zugrunde, ein Verfahren zur Steuerung von Fahrzeugfunktionen anzugeben, bei denen die Bedienbarkeit vereinfacht und intuitiver gestaltet wird.

Diese Aufgabe ist bei der vorliegenden Erfindung durch die Merkmale des Kennzeichnungsteils des Patentanspruchs 1 zunächst dadurch gelöst, dass im Randbereich des ersten Bedien- und Anzeigebereichs mindestens ein zweiter Bedien- und Anzeigebereich angeordnet ist, dass der zweite Bedien- und Anzeigebereich zumindest teilweise berührungssensitiv ist und dass Fahrzeugfunktionen zumindest teilweise im zweiten Bedien- und Anzeigebereich eingestellt werden.

Bei dem ersten Bedien- und Anzeigebereich kann es sich um ein Display im Mittelbereich oder im Cockpitbereich, beispielsweise im Bereich eines Kombiinstruments des Fahrzeugs, handeln. Das Display ist berührungssensitiv ausgestaltet. Unter der Berührungssensitivität ist dabei eine Touchfunktion zu verstehen, die beispielsweise durch ein kapazitives Display und/oder ein resistives Display realisiert werden kann.

Unter Fahrzeugfunktionen sind alle Einstellungen zu verstehen, die mittels einer elektronischen Vorrichtung vom Fahrer des Fahrzeugs eingestellt werden können.

Bei dem zweiten Bedien- und Anzeigebereich kann es sich sowohl ausschließlich um einen Bedienbereich ohne Anzeigefunktion als auch ausschließlich um einen Anzeigebereich ohne Bedienfunktion handeln. Bevorzugt handelt es sich aber um eine Kombination aus Bedien- und Anzeigebereich. Der zweite Bedien- und Anzeigebereich ist ebenfalls berührungssensitiv ausgestaltet. Wie auch beim ersten Bedien- und Anzeigebereich kann es sich beispielsweise um ein Display mit Touchfunktion handeln, aber auch Teil des Displays der ersten Bedien- und Anzeigeeinrichtung sein. Auch beim zweiten Bedien- und Anzeigebereich kann die Berührungssensitivität durch ein kapazitives oder resistives Display realisiert werden. Der zweite Bedien- und Anzeigebereich kann aber auch lediglich als Schieber zur Steuerung verschiedener Funktionen ausgestaltet sein. Dieser kann mechanisch aber auch elektronisch per Touchfunktion bereitgestellt werden.

Die zweite Bedien- und Anzeigeeinrichtung ist in einem Randbereich der ersten Bedien- und Anzeigeeinrichtung angeordnet. Unter dem Randbereich der ersten Bedien- und Anzeigeeinrichtung ist dabei mindestens ein Abschnitt zu verstehen, in dem die zweite Bedien- und Anzeigeeinrichtung derart angeordnet sein kann, dass die Funktionalität der ersten Bedien- und Anzeigeeinrichtung nicht beeinträchtigt wird.

Ein erster Vorteil des erfindungsgemäßen Verfahrens besteht darin, dass einstellbare Fahrzeugfunktionen nun innerhalb eines bestimmten Bereiches einstellbar sind. Wenn der zweite Bedien- und Anzeigebereich Teil des ersten Bedien- und Anzeigebereichs ist, können auf diese Weise auch zusätzliche elektronische Einrichtungen eingespart werden.

Weitere bevorzugte Ausgestaltungen der Erfindung ergeben sich aus den übrigen, in den Unteransprüchen genannten Merkmalen.

Bei einer ersten Ausgestaltung des erfindungsgemäßen Verfahrens ist vorgesehen, dass der zweite Bedien- und Anzeigebereich eine Kraftsensorik umfasst, um Fehlbedienungen zu vermeiden. Durch die Kraftsensorik kann sichergestellt werden, dass der zweite Bedien- und Anzeigebereich erst ab einem bestimmten Druck anspricht, der beispielsweise dem typischen Fingerdruck des Anwenders auf dem Display entspricht, so dass Einstellungen nicht unabsichtlich vorgenommen werden. Die Kraftsensorik kann derart eingestellt werden, dass der zweite Bedien- und Anzeigebereich auch bei einem zu hohen Druck nicht bedienbar ist. Dies kann beispielsweise der Fall sein, wenn Gegenstände unabsichtlich im Bereich des zweiten Bedien- und Anzeigebereichs gelagert und/oder abgestützt werden.

Bei einer weiteren Ausgestaltung des erfindungsgemäßen Verfahrens ist vorgesehen, dass zumindest bei der Einstellung von Fahrzeugfunktionen mittels des zweiten Bedien- und Anzeigebereichs ein haptisches Feedback ausgegeben wird. Das haptische Feedback kann dabei mechanisch erfolgen, beispielsweise durch eine Drucktaste. Bevorzugt wird das haptische Feedback durch Vibration vermittelt.

Alternativ oder zusätzlich kann bei einer weiteren Ausgestaltung des erfindungsgemäßen Verfahrens vorgesehen sein, dass zumindest bei der Einstellung von Fahrzeugfunktionen mittels des zweiten Bedien- und Anzeigebereich ein akustisches Feedback ausgegeben wird. Durch ein akustisches Feedback, beispielsweise einem Signalton, kann dem Bediener vermittelt werden, dass seine Eingabe beziehungsweise Berührung registriert wurde.

Um die Bedienung und die Durchführung des Verfahrens zu vereinfachen, ist bei einer weiteren Ausgestaltung des erfindungsgemäßen Verfahrens vorgesehen, dass der zweite Bedien- und Anzeigebereich am oberen und/oder unteren Randbereich des ersten Bedien- und Anzeigebereichs angeordnet ist. Auf diese Weise können Einstellungen der Fahrzeugfunktionen vereinfacht ausgeführt werden, da eine Orientierung am oberen oder unteren Randbereich zu einer intuitiven Bedienung beiträgt.

Zusätzlich oder alternativ ist bei einer weiteren Ausgestaltung der Erfindung vorgesehen, dass der zweite Bedien- und Anzeigebereich am linken und/oder rechten Randbereich des ersten Bedien- und Anzeigebereichs angeordnet ist. Entsprechend einer Orientierung im unteren oder oberen Randbereich können Einstellungen der Fahrzeugfunktionen auf diese Weise vereinfacht ausgeführt werden, da eine Orientierung am oberen oder unteren Randbereich zu einer intuitiven Bedienung beiträgt.

Erfindungsgemäß ist vorgesehen, dass der zweite Bedien- und Anzeigebereich vom ersten Bedien- und Anzeigebereich abgewinkelt ist. Wenn der erste Bedien- und Anzeigebereich nicht in einer Ebene mit dem zweiten Bedien- und Anzeigebereich liegt, wird auf diese Weise sowohl eine optische als auch physische Trennung des ersten Bedien- und Anzeigebereichs und des zweiten Bedien- und Anzeigebereichs erreicht. Durch die dreidimensionale Ausgestaltung der beiden Bereiche wird die Bedienbarkeit weiter vereinfacht und intuitiver gestaltet.

Der erste Anzeige- und Bedienbereich ist an einer ersten Seitenfläche angeordnet. Der zweite Bedien- und Anzeigebereich ist an einer zweiten Seitenfläche angeordnet, die an die erste Seitenfläche angrenzt. Denkbar ist beispielsweise, dass der erste Bedien- und Anzeigebereich als Display, insbesondere rechteckiges Display, ausgestaltet ist, das nur so weit im Fahrzeug verbaut ist, dass die Seitenflächen des Displays zumindest teilweise sichtbar sind, so dass zumindest eine Erhabenheit des Displays durch die hervorstehenden Seitenflächen erreicht wird. Die Seitenflächen können den zweiten Bedien- und Anzeigebereich umfassen.

Bei einer besonders bevorzugten Ausgestaltung des erfindungsgemäßen Verfahrens ist vorgesehen, dass die wesentlichen Fahrzeugfunktionen im zweiten Bedien- und Anzeigebereich gebündelt werden. Durch eine zentrale Bündelung der wesentlichen Bedien- und/oder Anzeigefunktionen des Fahrzeugs wird eine Kosteneinsparung erreicht, da Einzelmodule in Form von weiteren elektronischen Vorrichtungen entfallen können. Zusätzlich wird ein aufgeräumtes, reduziertes Fahrzeuginterieur realisiert.

Bei einer weiteren Ausgestaltung der Erfindung ist vorgesehen, dass zumindest eine Fensterheberfunktion und/oder eine Lautstärkeeinstellung und/oder eine Temperaturwahl mittels des zweiten Bedien- und Anzeigebereichs eingestellt werden. Durch Bündelung dieser Funktionen im zweiten Bedien- und Anzeigebereich können gesonderte Bedienelemente für Fensterheber oder das Modul zur Steuerung der Klimaanlage entfallen.

Darüber hinaus kann bei einer weiteren Ausgestaltung des erfindungsgemäßen Verfahrens vorgesehen sein, dass Fahrzeugfunktionen, die den linken Bereich des Fahrzeugs betreffen, im Bereich des linken Randbereichs des ersten Bedien- und Anzeigebereichs eingestellt werden und dass Fahrzeugfunktionen, die den rechten Bereich des Fahrzeugs betreffen, im Bereich des rechten Randbereichs des ersten Bedien- und Anzeigebereichs eingestellt werden. Auf diese Weise wird eine intuitive Steuerungsmöglichkeit bereitgestellt. Denkbar ist beispielsweise, dass die Steuerung zum Öffnen und Schließen der Fenster auf der linken Fahrzeugseite im Bereich des linken Randbereichs des ersten Bedien- und Anzeigebereichs verortet wird. Entsprechend kann die Steuerung zum Öffnen und Schließen der Fenster auf der rechten Fahrzeugseite im Bereich des rechten Randbereichs des ersten Bedien- und Anzeigebereichs verortet sein.

Entsprechend können Lüftungs-, Klima- und/oder Heizungseinstellungen für den Beifahrer im Bereich des rechten Randbereichs des ersten Bedien- und Anzeigebereichs verortet sein, wohingegen Lüftungs-, Klima- und/oder Heizeinstellungen für die Fahrerseite im Bereich des linken Randbereichs des ersten Bedien- und Anzeigebereichs verortet sind.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung einer Anzeige- und Bedienvorrichtung zur Durchführung eines erfindungsgemäßen Verfahrens und
- Figur 2: eine schematische Darstellung der Funktionsweise der Anzeige- und Bedienvorrichtung gemäß Figur 1.

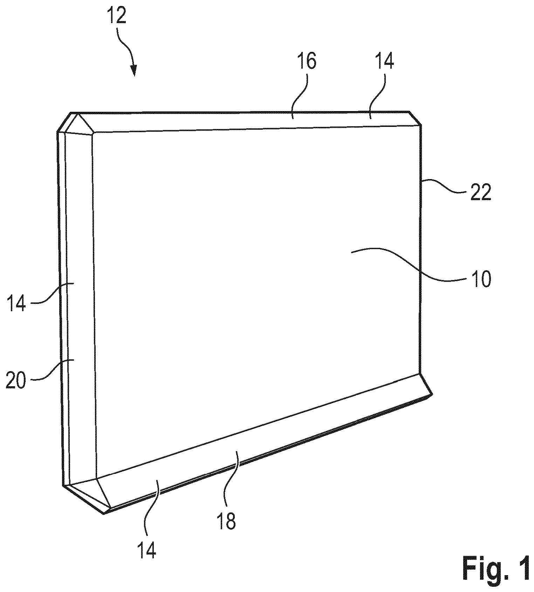

Figur 1 zeigt eine Anzeige- und Bedienvorrichtung mit einem ersten Bedien- und Anzeigebereich 10. Im Randbereich 12 der ersten Bedien- und Anzeigeeinrichtung 10 ist ein zweiter Bedien- und Anzeigebereich 14 angeordnet. Der zweite Bedien- und Anzeigebereich 14 ist im vorliegenden Ausführungsbeispiel umlaufend um den ersten Bedien- und Anzeigebereich 10 orientiert. Dadurch ergibt sich ein oberer Randbereich 16, ein unterer Randbereich 18, ein linker Randbereich 20 und ein rechter Randbereich 22.

Bei dem ersten Bedien- und Anzeigebereich 10 handelt es sich um ein Display, das beispielsweise im Mittelbereich oder im Cockpitbereich, beispielsweise im Bereich eines Kombiinstruments des Fahrzeugs, angeordnet werden kann. Das Display ist kapazitiv, also berührungssensitiv, ausgestaltet. Darüber hinaus ist eine Kraftsensorik vorgesehen, die entsprechende Berührungen registriert und Fehlbedienungen verhindert. Zusätzlich wird bei Berührung des zweiten Bedien- und Anzeigebereichs 14 ein akustisches Signal sowie ein haptisches Feedback in Form von Vibration ausgesendet.

Der obere Randbereich 16, der linke Randbereich 20 und der rechte Randbereich 22 sind in einem Winkel von etwa 45° abgewinkelt, so dass sie optisch, ausgehend vom ersten Bedien- und Anzeigebereich 10, nach hinten gekippt sind. Der untere Randbereich 18 ist in einem Winkel von etwa 45° in die entgegengesetzte Richtung abgewinkelt, so dass er optisch, ausgehend vom ersten Bedien- und Anzeigebereich 10, nach vorne gekippt ist. Auf diese Weise wird die Bedienbarkeit vereinfacht.

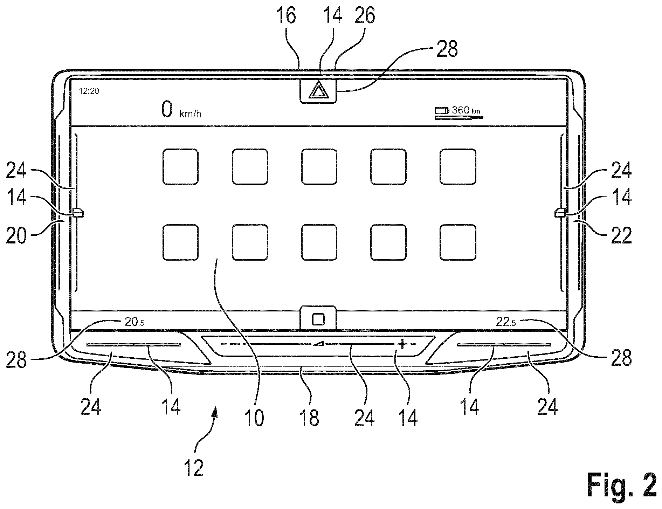

Figur 2 zeigt das Ausführungsbeispiel gemäß Figur 1 mit verschiedenen zusätzlichen Funktionen.

Es ist vorgesehen, dass die wesentlichen Fahrzeugfunktionen im zweiten Bedien- und Anzeigebereich 14 gebündelt werden. Durch eine zentrale Bündelung der wesentlichen Bedien- und Anzeigefunktionen des Fahrzeugs wird eine Kosteneinsparung erreicht, da Einzelmodule in Form von weiteren elektronischen Vorrichtungen entfallen können. Zusätzlich wird ein aufgeräumtes, reduziertes Fahrzeuginterieur realisiert.

Darüber hinaus werden Fahrzeugfunktionen, die den linken Bereich des Fahrzeugs betreffen, im Bereich des linken Randbereichs 20 des ersten Bedien- und Anzeigebereichs 10 eingestellt. Fahrzeugfunktionen, die den rechten Bereich des Fahrzeugs betreffen, werden im Bereich des rechten Randbereichs 22 des ersten Bedien- und Anzeigebereichs 10 eingestellt. Auf diese Weise wird eine intuitive Steuerungsmöglichkeit bereitgestellt.

Bei diesem Ausführungsbeispiel wird die Fensterheberfunktion für die linke Fahrzeugseite im linken Randbereich 20 des ersten Bedien- und Anzeigebereichs 10 durch den zweiten Bedien- und Anzeigebereich 14 eingestellt. Das Öffnen und Schließen des Fensters beziehungsweise der Fenster kann durch einen berührungsempfindlichen Schieberegler 24 im linken Randbereich 20 des ersten Bedien- und Anzeigebereichs 10 durch den zweiten Bedien- und Anzeigebereich 14 geregelt werden. Entsprechend wird das Fenster beziehungsweise werden die Fenster durch einen berührungsempfindlichen Schieberegler 24 im rechten Randbereich 22 des ersten Bedien- und Anzeigebereichs 10 durch den zweiten Bedien- und Anzeigebereich 14 eingestellt.

Die Temperatureinstellungen der Heizung beziehungsweise der Klimaanlage können im unteren Randbereich 18 des ersten Bedien- und Anzeigebereichs 10 durch den zweiten Bedien- und Anzeigebereich 14 eingestellt werden. Die Erhöhung oder Verringerung der Temperatur durch die Lüftungsanlage auf der Fahrerseite kann durch einen berührungsempfindlichen Schieberegler 24 auf der linken Seite des unteren Randbereichs 18 des ersten Bedien- und Anzeigebereichs 10 durch den zweiten Bedien- und Anzeigebereich 14 geregelt werden. Entsprechend wird die Temperatur durch die Lüftungsanlage auf der Beifahrerseite durch einen berührungsempfindlichen Schieberegler 24 auf der rechten Seite des unteren Randbereichs 18 des ersten Bedien- und Anzeigebereichs 10 durch den zweiten Bedien- und Anzeigebereich 14 eingestellt.

In der Mitte des unteren Randbereichs 18 kann durch einen weiteren Schieberegler 24 die Lautstärke des Infotainmentsystems eingestellt werden. Im oberen Randbereich 16 ist durch einen berührungsempfindlichen Schalter 26 eine Möglichkeit gegeben, das Warnblinklicht einzuschalten.

Im ersten Bedien- und Anzeigebereich 10 können in der Nähe der durch den zweiten Bedien- und Anzeigebereich 14 einstellbaren Funktionen entsprechende Anzeigen 28 verortet sein, die Auskunft über die Funktionen der einzelnen Schieberegler 24 und Schalter 26 geben. Im ersten Bedien- und Anzeigebereich 10 werden verschiedene Menüs oder aktive Kontexte des Infotainmentsystems oder des Navigationssystems angezeigt. Zusätzlich werden auch weitere Informationen, wie beispielsweise Fahrinformationen, angezeigt. Dazu gehören Inhalte des Kombiinstruments, die permanent angezeigt werden können. Anzeigen der Geschwindigkeit, der verbleibenden Reichweite, der Schaltstufe, Informationen über Blinker und/oder Warnmeldungen sind denkbar.

### Bezugszeichenliste

- 10: erster Bedien- und Anzeigebereich
- 12: Randbereich
- 14: zweiter Bedien- und Anzeigebereich
- 16: oberer Randbereich
- 18: unterer Randbereich
- 20: linker Randbereich
- 22: rechter Randbereich
- 24: Schieberegler
- 26: Schalter
- 28: Anzeige

## Patentansprüche

1. Verfahren zur Steuerung von Fahrzeugfunktionen, insbesondere eines Kraftfahrzeuges, wobei Fahrzeugfunktionen zumindest teilweise in einem ersten Bedien- und Anzeigebereich (10) eingestellt werden, wobei der erste Bedien- und Anzeigebereich (10) zumindest teilweise berührungssensitiv ist, wobei im Randbereich (12) des ersten Bedien- und Anzeigebereichs (10) mindestens ein zweiter Bedien- und Anzeigebereich (14) angeordnet ist, der zweite Bedien- und Anzeigebereich (14) zumindest teilweise berührungssensitiv ist und Fahrzeugfunktionen zumindest teilweise im zweiten Bedien- und Anzeigebereich (14) eingestellt werden, **dadurch gekennzeichnet, dass** der zweite Bedien- und Anzeigebereich (14) vom ersten Bedien- und Anzeigebereich (10) abgewinkelt ist, wobei der erste Bedien- und Anzeigebereich (10) nicht in einer Ebene mit dem zweiten Bedien- und Anzeigebereich (14) liegt.

2. Verfahren nach Anspruch 1, **dadurch gekennzeichnet, dass** der zweite Bedien- und Anzeigebereich (14) eine Kraftsensorik umfasst, um Fehlbedienungen zu vermeiden.

3. Verfahren nach Anspruch 1 oder 2, **dadurch gekennzeichnet, dass** zumindest bei der Einstellung von Fahrzeugfunktionen mittels des zweiten Bedien- und Anzeigebereichs (14) ein haptisches Feedback ausgegeben wird.

4. Verfahren nach einem der Ansprüche 1 bis 3, **dadurch gekennzeichnet, dass** zumindest bei der Einstellung von Fahrzeugfunktionen mittels des zweiten Bedien- und Anzeigebereichs (14) ein akustisches Feedback ausgegeben wird.

5. Verfahren nach einem der Ansprüche 1 bis 4, **dadurch gekennzeichnet, dass** der zweite Bedien- und/oder Anzeigebereich (14) am oberen Randbereich (16) und/oder unteren Randbereich (18) des ersten Bedien- und Anzeigebereichs (10) angeordnet ist.

6. Verfahren nach einem der Ansprüche 1 bis 5, **dadurch gekennzeichnet, dass** der zweite Bedien- und Anzeigebereich (14) am linken Randbereich (20) und/oder rechten Randbereich (22) des ersten Bedien- und Anzeigebereichs (10) angeordnet ist.

7. Verfahren nach einem der Ansprüche 1 bis 6, **dadurch gekennzeichnet, dass** die wesentlichen Fahrzeugfunktionen im zweiten Bedien- und Anzeigebereich (14) gebündelt werden.

8. Verfahren nach Anspruch 7, **dadurch gekennzeichnet, dass** zumindest eine Fensterheberfunktion und/oder eine Lautstärkeeinstellung und/oder eine Temperaturwahl mittels des zweiten Bedien- und Anzeigebereichs (14) eingestellt werden.

9. Verfahren nach einem der Ansprüche 1 bis 8, **dadurch gekennzeichnet, dass** Fahrzeugfunktionen, die den linken Bereich des Fahrzeugs betreffen, im Bereich des linken Randbereichs (20) des ersten Bedien- und Anzeigebereichs (10) eingestellt werden und dass Fahrzeugfunktionen, die den rechten Bereich des Fahrzeugs betreffen, im Bereich des rechten Randbereichs (22) des ersten Bedien- und Anzeigebereichs (10) eingestellt werden.

## Claims

1. Method for controlling vehicle functions, in particular of a motor vehicle, at least some vehicle functions being set in a first operating and display region (10), the first operating and display region (10) being at least partly touch-sensitive, at least one second operating and display region (14) being arranged in the edge region (12) of the first operating and display region (10), the second operating and display region (14) being at least partly touch-sensitive and at least some vehicle functions being set in the second operating and display region (14), **characterized in that** the second operating and display region (14) is angled from the first operating and display region (10), the first operating and display region (10) not being in the same plane as the second operating and display region (14).

2. Method according to claim 1, **characterized in that** the second operating and display region (14) comprises a force sensor system to prevent incorrect operation.

3. Method according to claim 1 or 2, **characterized in that** haptic feedback is output at least when vehicle functions are set by means of the second operating and display region (14).

4. Method according to any of claims 1 to 3, **characterized in that** acoustic feedback is output at least when vehicle functions are set by means of the second operating and display region (14).

5. Method according to any of claims 1 to 4, **characterized in that** the second operating and/or display region (14) is arranged at the upper edge region (16) and/or lower edge region (18) of the first operating and display region (10).

6. Method according to any of claims 1 to 5, **characterized in that** the second operating and display region (14) is arranged on the left edge region (20) and/or right edge region (22) of the first operating and display region (10).

7. Method according to any of claims 1 to 6, **characterized in that** the essential vehicle functions are bundled in the second operating and display region (14).

8. Method according to claim 7, **characterized in that** at least one window lift function and/or a volume setting and/or a temperature selection are set by means of the second operating and display region (14).

9. Method according to any of claims 1 to 8, **characterized in that** vehicle functions relating to the left region of the vehicle are set in the region of the left edge region (20) of the first operating and display region (10) **and in that** vehicle functions relating to the right region of the vehicle are set in the region of the right edge region (22) of the first operating and display region (10).

## Revendications

1. Procédé permettant la commande de fonctions de véhicule, en particulier d'un véhicule automobile, dans lequel les fonctions de véhicule sont réglées au moins partiellement dans une première zone de manipulation et d'affichage (10), dans lequel la première zone de manipulation et d'affichage (10) est au moins partiellement sensible au toucher, dans lequel au moins une seconde zone de manipulation et d'affichage (14) est disposée dans la zone marginale (12) de la première zone de manipulation et d'affichage (10), la seconde zone de manipulation et d'affichage (14) est au moins partiellement sensible au toucher et les fonctions de véhicule sont réglées au moins partiellement dans la seconde zone de manipulation et d'affichage (14), **caractérisé en ce que** la seconde zone de manipulation et d'affichage (14) est coudée par rapport à la première zone de manipulation et d'affichage (10), dans lequel la première zone de manipulation et d'affichage (10) n'est pas dans un plan comportant la seconde zone de manipulation et d'affichage (14).

2. Procédé selon la revendication 1, **caractérisé en ce que** la seconde zone de manipulation et d'affichage (14) comprend une technologie de capteurs de force afin d'éviter les erreurs de manipulation.

3. Procédé selon la revendication 1 ou 2, **caractérisé en ce qu'**un retour haptique est émis au moins lors du réglage des fonctions de véhicule au moyen de la seconde zone de manipulation et d'affichage (14).

4. Procédé selon l'une des revendications 1 à 3, **caractérisé en ce qu'**un retour acoustique est émis au moins lors du réglage des fonctions de véhicule au moyen de la seconde zone de manipulation et d'affichage (14).

5. Procédé selon l'une des revendications 1 à 4, **caractérisé en ce que** la seconde zone de manipulation et/ou d'affichage (14) est disposée sur la zone marginale supérieure (16) et/ou sur la zone marginale inférieure (18) de la première zone de manipulation et d'affichage (10).

6. Procédé selon l'une des revendications 1 à 5, **caractérisé en ce que** la seconde zone de manipulation et d'affichage (14) est disposée sur la zone marginale gauche (20) et/ou sur la zone marginale droite (22) de la première zone de manipulation et d'affichage (10).

7. Procédé selon l'une des revendications 1 à 6, **caractérisé en ce que** les fonctions de véhicule essentielles sont regroupées dans la seconde zone de manipulation et d'affichage (14).

8. Procédé selon la revendication 7, **caractérisé en ce qu'**au moins une fonction de lève-vitre et/ou un réglage de volume sonore et/ou une sélection de température sont réglés au moyen de la seconde zone de manipulation et d'affichage (14).

9. Procédé selon l'une des revendications 1 à 8, **caractérisé en ce que** les fonctions de véhicule qui concernent la zone gauche du véhicule sont réglées dans la zone de la zone marginale gauche (20) de la première zone de manipulation et d'affichage (10) **et en ce que** les fonctions de véhicule qui concernent la zone droite du véhicule sont réglées dans la zone de la zone marginale droite (22) de la première zone de manipulation et d'affichage (10).
